# NEW EUROPEAN PATENT SPECIFICATION

(11) **EP 0 579 724 B2**
(45) Date of publication and mention of the opposition decision: **28.04.2010**
(45) Mention of the grant of the patent: 11.08.1999
(21) Application number: 92909758.2
(22) Date of filing: 08.04.1992
(51) Int. Cl.: G01N 21/64, G02B 26/10, G02B 21/00, G02B 13/14

(54) **CONFOCAL IMAGING SYSTEM FOR VISIBLE AND ULTRAVIOLET LIGHT**
KONFOKALES ABBILDUNGSSYSTEM FÜR SICHTBARES UND UV-LICHT
SYSTEME D'IMAGERIE A FOYER COMMUN POUR LA LUMIERE VISIBLE ET LA LUMIERE ULTRAVIOLETTE

(30) Priority: 10.04.1991 US 683428
(43) Date of publication of application: 26.01.1994
(73) Proprietor: MAYO FOUNDATION FOR MEDICAL EDUCATION AND RESEARCH, Rochester, MN 55905 (US)
(72) Inventor: BLITON, Allison, Christyne, Okemos, MN 48864 (US); CLAPHAM, David, Eldon, Rochester, MN 55902 (US); LECHLEITER, James Donald, Gordonsville, VA 22942 (US)
(74) Representative: Harrison, David Christopher
(86) International application number: PCT/US1992/002923
(87) International publication number: WO 1992/018850

(56) References cited:
- EP-A- 0 327 425
- US-A- 3 598 471
- US-A- 4 656 358
- US-A- 4 863 226
- US-A- 4 893 008
- US-A- 5 032 720
- US-A- 5 091 652

## Description

This invention relates generally to confocal microscopy and more specifically to a confocal scanning microscope usable with visible and ultraviolet (UV) light.

Fluorescent light microscopy is extensively used in biological research and medical diagnosis. It provides the selectivity necessary to enable specific components of a cell or tissue to be visualized and the spatial organization of such components to be determined. Confocal microscopy operates so that illumination and detection are confined to a single point in the sample. This is typically achieved by using spatial filters (usually pinholes) in the optical paths of the objective and condenser, and a complete image is built up by sequentially scanning all points in the field of view.

A particular confocal microscope is shown in U.S. Patent No. 5,032,720. The microscope produces a small (preferably diffraction limited) spot on a sample, scans the spot over the sample in a raster pattern, and generates an electrical signal proportional to the intensity of light emanating and collected from the region of the spot. The electrical signal is communicated to a computer which can produce a visual display on the monitor.

The optical train between the source (or detector) and the sample comprises focusing optics to form the spot and scanning elements to scan the beam in two orthogonal directions to form the raster pattern on the sample. The light emanating from the sample passes along a return path to a detector, which generates the electricai signal. An aperture in the form of an iris diaphragm is disposed in front of the detector and blocks light that emanated from points spatially displaced from the beam spot.

A confocal microscope accessory for use in combination with a conventional microscope has been marketed under the trade designations MRC-500 and MRC-600 by Bio-Rad Laboratories, Inc., Hercules, California. The resulting confocal microscope provides a visible excitation beam and senses fluorescence in the visible beam.

The present invention provides a scanning confocal microscope capable of providing ultraviolet (UV) excitation; so much is also seen in US-A-4893008. However, in the present invention the optical train substantially corrects scanning and focusing errors over the wavelength range that includes UV and visible wavelengths. Achromatic correction, per se, is known - see for example US-A-3598471.

In brief, the confocal scanning microscope according to the present invention includes a UV excitation source and UV-transmissive scanning and imaging optics. The UV light is directed along a forward path and focused to a small spot in a sample plane. Light emanating from the region of the spot is directed along a return path and detected. Light emanating from points spatially displaced from the spot is rejected by the detector aperture. The beam spot is scanned over the sample in raster pattern. Where the returning light is visible (as for example when it is desired to detect visible fluorescence), the optical train is made confocal for both the visible and UV light. This also makes it possible to provide simultaneous UV and visible excitation.

To achieve this, the lenses in the common path portion of the optical train are corrected for chromatically induced scanning errors. A UV lens is provided in the forward UV path to correct for focusing errors due to longitudinal chromatic (visible/UV) aberration. Extra lenses may be provided in the forward UV path for this purpose. Separating out the correction of scanning errors and focusing errors makes it easy to accommodate different objectives that vary in their degree of longitudinal chromatic aberration.

A further understanding of the nature and advantage of the present invention can be realized by reference to the remaining portions of the specification and the drawings, in which:
Figs. 1A and 1B are simplified optical schematics of a prior art confocal microscope;
Fig. 1C is an optical sketch illustrating proper confocal operation;
Fig. 2 is a simplified optical schematic of an inverted microscope embodiment of the present invention;
Figs. 3 and 4 are optical schematics of a first-generation eyepiece and adapter lens for the inverted microscope embodiment;
Fig. 5 is an optical schematic of a first-generation eyepiece for an upright microscope embodiment of the invention;
Fig. 6 is an optical schematic of a second-generation 6.25x eyepiece for the inverted microscope embodiment;
Figs. 7A and 7B are optical schematics of a second-generation 8x eyepiece and adapter lens for the inverted microscope embodiment;
Fig. 8 is an optical schematic of a second-generation 8x eyepiece for the upright microscope embodiment;
Figs. 9A-E are optical sketches illustrating the effect and correction of focusing errors;
Figs. 10A-C are optical sketches illustrating the effect and correction of scanning errors;
Fig. 11 shows plots illustrating the effect and correction of field curvature;
Figs. 12A-C are plots illustrating the effect and correction of field curvature and magnification errors; and
Fig. 13A and 13B show plots of intensity across the field.

### Prior Art Visible Confocal Microscope

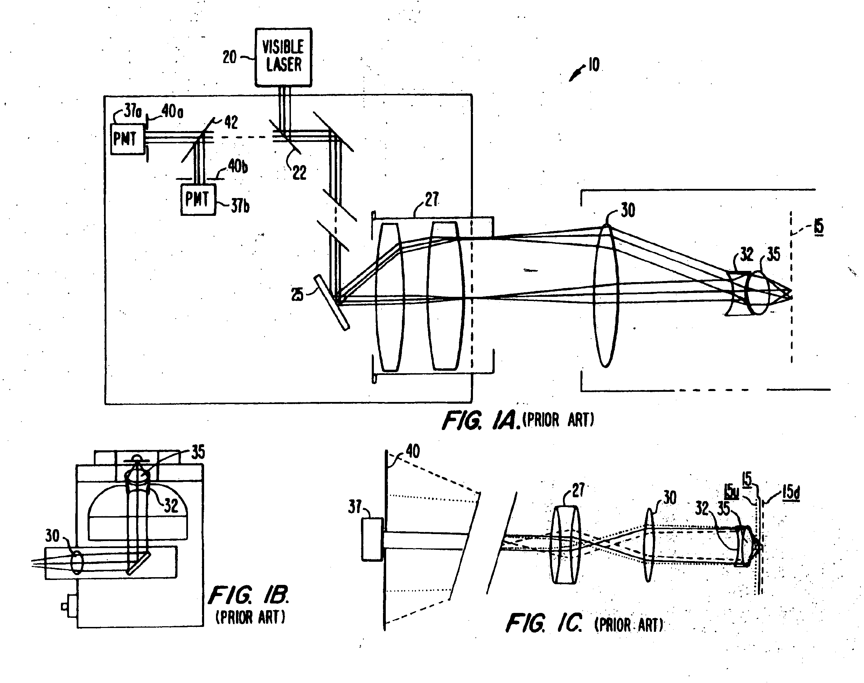

Fig. 1A is a simplified optical schematic of a prior art scanning confocal microscope 10. The particular prior art confocal microscope discussed here and the confocal microscope as modified according to the present invention is a Bio-Rad MRC-600 accessory used in combination with a conventional microscope. The term "microscope" will typically be used to mean the scanning confocal microscope resulting from the combination.

The microscope operates to focus a beam of visible light to a point in a sample plane 15, and to detect light (reflected light and fluorescence) emanating from the point in the sample plane. To this end, the microscope includes a visible light source 20 such as an argon ion laser whose beam is directed along a forward path through an optical train comprising a beam splitter 22, scanning optics 25, an eyepiece 27, an adapter lens 30, an infinity-correcting lens 32 (referred to as telon lens 32), and an objective 35. Beam splitter 22 is formed of a dichroic material that reflects the visible excitation beam but transmits light in the range of wavelengths characteristic of the fluorescence from the sample. The objective and eyepiece focus the beam to form a small spot nominally in the sample plane.

Light emanating from the region of the spot travels along a return path until it reaches beam splitter 22, from which point it passes through and is directed to a detector 37a such as a photomultiplier tube (PMT). An aperture 40a, preferably an iris diaphragm (variable diameter 0.7-7.0 mm), is disposed in front of the detector. A dichroic beam splitter 42 may be disposed in the return-only path to direct light in one wavelength range to detector 37a and light in a different wavelength range to a second detector 37b and associated aperture 40b.

The optical path from the scanning optics assembly to the detector is folded by means of a number of plane steering mirrors in order to provide a relatively long path length. The scanning optics comprises a pair of galvanometer-driven plane mirrors with relay optics, preferably a pair of facing concave mirrors, therebetween. The first scanning mirror scans the beam in a plane perpendicular to that of the figure while the second scanning mirror scans the beam in the plane of the figure. Only the second scanning mirror is shown in the schematic.

The last scanning mirror is placed near the front focal plane of the eyepiece so that the beams travel from the eyepiece to the adapter lens generally parallel to the optic axis, regardless of scan angle. The collimated laser beam is focused to the back focal plane of the eyepiece; the microscope is located relative to the confocal accessory so that the front focal plane of the adapter lens coincides with the eyepiece back focal plane.

The particular embodiment illustrated is for an inverted microscope where the optical path between the eyepiece and the objective is longer than the distance for that which eyepieces and objectives are normally designed. An extra detail view is shown in Fig. 1B. Most objectives are corrected to receive incoming light as if it were coming from a point source 160 mm away. Telon lens 32 cooperates with the objective so that the combination of the two is corrected for incoming parallel light (i.e., is infinity corrected). In a complementary manner, the adapter lens (which is basically a 160 mm achromat) cooperates with the eyepiece to provide parallel light. Thus adapter lens 30 and telon lens 32 operate as a type of a relay optics. In an upright microscope embodiment (not illustrated), the adapter lens and telon lens are absent.

It is sometimes convenient to consider the upstream elements (eyepiece and possible adapter lens) as a unit and the downstream elements (possible telon lens and objective) as a unit. The use of an eyepiece, a long return path, and a collimated return beam allows confocal operation to be achieved without pinhole spatial filters.

For purposes of discussion, it is convenient to divide the optical paths into a number of segments. The term "forward-only" will refer to the path segment from the light source to beam splitter 22 over which only excitation light travels. The term "common path segment" will refer to the optical path between the beam splitter and the sample plane over which light travels in both directions. The term "return-only" will refer to the path segment between the beam splitter and the detector, over which only light returning from the sample travels. References to the front surface of a lens will be taken to mean the surface that is first encountered by the light on the forward path while references to the back surface will be taken to mean the surface that is first encountered by the light on the return path.

### Confocal Operation

Fig. 1C shows how light emerging from the region of the beam spot in sample plane 15 passes back through the optical system along the return path and passes to the detector. The figure also shows how light diverging from points in a pair of planes 15u and 15d displaced upstream and downstream, respectively, from the sample plane is rejected by the aperture. Sample plane 15 is drawn as a solid line, and the light emanating from a point in plane 15 is drawn as solid lines. Planes 15u and 15d are drawn in two styles of broken lines, and the light emerging from those planes is drawn correspondingly. As can be seen, the light emerging from downstream plane 15d is refocused by the lenses and diverges while the light emerging from upstream plane 15u is diverging when it leaves the lenses. In both cases, the beams have diverged greatly by the time they reach the aperture plane and are largely rejected by the aperture.

The above description is subject to a slight qualification. To the extent that light from sample plane is collimated by the optics, light emanating from a plane very slightly downstream (not as far downstream as plane 15d) is actually focused into the aperture. What this means is that the light reaching the detector includes a small component that is not confocal with the excitation light. The effect can be avoided by placing a long lens (say 1000 mm) in the return-only path so that it focuses the collimated (confocal) beam into the aperture and causes the light from slightly downstream to be diverging when it reaches the aperture. This will be discussed in greater detail below.

### UV Confocal Microscope Embodiments

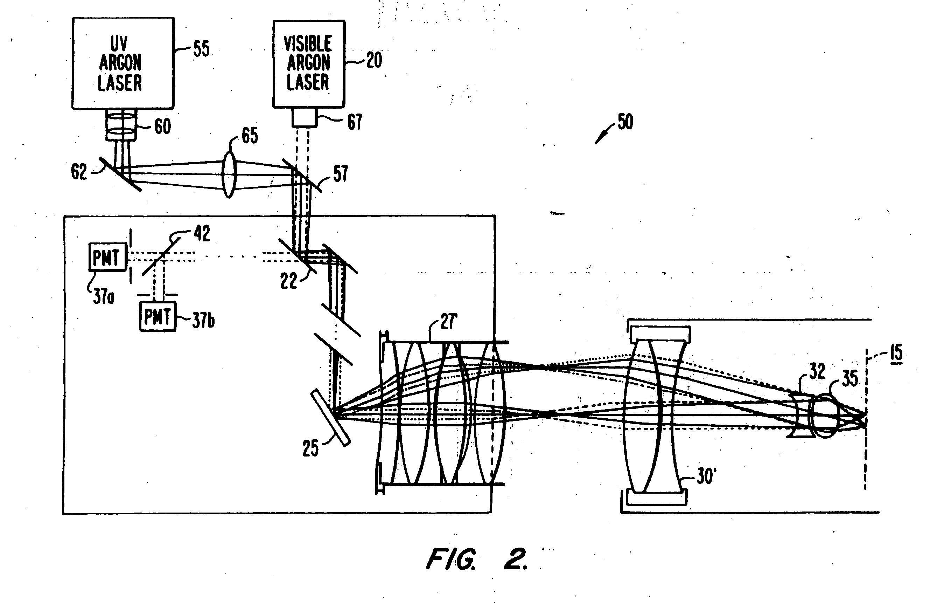

Fig. 2 is a simplified optical schematic of a confocal microscope 50, modified according to the present invention so that both visible and UV light can be used for excitation. Elements that are the same as those in Fig. 1A will have the same reference numerals, corresponding elements that are modified will have primed reference numerals, and elements that have no counterpart in Fig. 1A will have different reference numerals. As above, an inverted microscope embodiment is illustrated.

Confocal operation as described in connection with the prior art visible microscope does not naturally extend into the realm of UV excitation, much less so when it is desired to provide visible excitation as well. The first obvious problem is that eyepiece 27 does not transmit UV light and adapter lens 30 transmits it poorly. However, even if the lenses transmit UV, a number of aberrations must be corrected for proper operation to occur. The design details for both inverted and upright microscope embodiments are described (and illustrated where appropriate) below.

A UV laser 55 provides a UV beam that is combined with the visible beam from visible laser 20 by a beam combiner 57 (which is a visible/UV dichroic reflector). A focusing UV (5x) beam expander 60, steering mirrors 62, and a UV correction lens 65 are interposed between UV laser 55 and beam combiner 57. To the extent that beam splitter 22 does not reflect UV light, it must be modified so that it reflects both the visible and UV laser beams but transmits the visible fluorescence. The microscope is further modified by being provided a specially designed eyepiece 27' and adapter lens 30', to be described below. The characteristics of beam splitter 42 may be selected in view of the visible wavelengths to be separated.

Focusing UV beam expander 60 provides magnification to allow filling the back aperture of the objective sufficiently to obtain maximum resolution. The use of a confocal microscope reduces the smallest detectable distance between spots to 0.707 times the smallest distance detectable by a conventional microscope. The use of UV excitation improves the resolution relative to that obtainable with visible excitation due to the shorter wavelength.

A visible beam expander 67 is preferably disposed between visible laser 20 and beam combiner 57, and provides 1.5x-2x magnification to allow the visible excitation beam to fill the back aperture of the objective. This is necessary since UV eyepiece 27' has a lower magnification than visible eyepiece 27 (about 6.4x versus 8x). In view of the reduced magnification, consideration is being given to reducing the minimum aperture diameter from 0.7 mm to 0.5 mm.

UV correction lens 65 is preferably a 500mm lens that focuses the UV excitation light to a point in front of the eyepiece, from which point it diverges. As noted above, the visible excitation light is generally collimated until it reaches the eyepiece. The UV light is caused to diverge so as to correct for longitudinal chromatic aberration effects in the downstream lens elements. As will be discussed in more detail below, there are chromatic scanning effects that must be corrected in the eyepiece and adapter lens, and the correction of those tends to make it difficult to correct for longitudinal chromatic aberration as well.

The position of the UV correction lens along the optical axis can be adjusted, either alone or in conjunction with refocusing of the beam expander in order to adjust for different amounts of longitudinal chromatic aberration in different objectives while maintaining appropriate filling of the back aperture of the objective. This is a relatively necessary option since objective chromatic aberrations vary significantly in the UV, and back aperture sizes vary significantly with different objectives.

### First-Generation Lens Designs

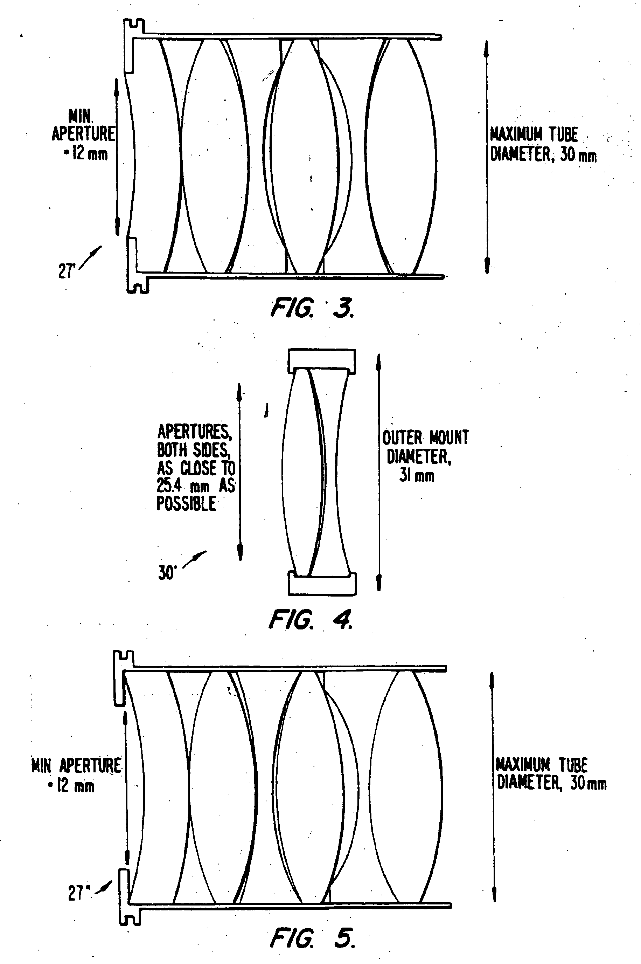

Figs. 3 and 4 are optical schematics of a first-generation design for eyepiece 27' and UV adapter lens 30' for the inverted microscope embodiment. The geometrical and optical parameters for these lenses are set forth in Tables 1 and 2. Surfaces are numbered along the direction of the laser beams and dimensions are in mm unless otherwise stated. Chromatic correction was in terms of the following design wavelengths: 330nm, 464nm, 560nm, and 656nm. The lens design was performed using the OPTEC optical systems design analysis software (PC version), available from SCIOPT Enterprises, San Jose, California.

Fig. 5 is an optical schematic of a first-generation design for the eyepiece, designated 27", for the upright microscope embodiment. The geometrical and optical parameters for this lens are set forth in Table 3.

The design criteria for the eyepiece (alone for the upright embodiment or in combination with the adapter lens for the inverted embodiment) can be summarized as follows. The eyepiece (or combination) is well corrected for the standard monochromatic aberrations (spherical aberration, coma, astigmatism, distortion) for each design wavelength for light traveling in both directions. As noted above, UV focus is corrected by focusing lens 65 and focusing beam expander 60, although the eyepiece (or combination) is corrected for longitudinal chromatic aberration for visible wavelengths. The eyepiece (or combination) is, however, chromatically corrected to minimize scanning errors as will be discussed below. Field curvature is minimized and matched for different colors for a visible object at infinity and a finite UV object located 195 mm from the front surface of the eyepiece. The front focal length is sufficiently long to prevent the eyepiece from touching the scanning mirror motor during adjustment.

The particular lens design was also subject to a number of more mundane constraints. For example, the glasses had to be affordable and relatively easy to manufacture into high quality lenses. Further the lens had to withstand normal laboratory temperature and humidity conditions and exposure to UV and visible laser radiation. Fused silica and calcium fluoride were chosen as the lens materials because they pass UV light, are fairly hardy under normal laboratory conditions, do not cloud with prolonged UV light exposure (under 200 mw of power), and have sufficiently different dispersion characteristics to allow chromatic corrections with reasonably attainable lens surface curvatures.

In the first-generation design, the calcium fluoride lens elements are all the same shape, being available as stock items from Janos Technology, Inc., Townshend, Vermont, at the desired quality (1% tolerances on curvature and thickness). It was believed, however, that improvements in the monochromatic aberrations could be achieved (at a cost) by relaxing the symmetry constraint on the calcium fluoride lens elements and having them custom ground. This was done in a series of second-generation designs.

### Second-Generation Lens Designs

A number of second-generation designs were developed, characterized by the following differences from the first generation design. First, they are not subject to the constraint that the calcium fluoride elements be any particular shape. Second, the order of the last two elements of the eyepiece is reversed so that none of the calcium fluoride elements (which are somewhat sensitive to humidity) is exposed to the atmosphere. Along this line, the adapter lens is provided with an extra silica element to reduce chromatic aberrations and enclose the calcium fluoride element. These second-generation designs include 6.25x and 8x eyepieces and adapters (same adapter for both) for the inverted microscope embodiment, and an 8x eyepiece for the upright microscope.

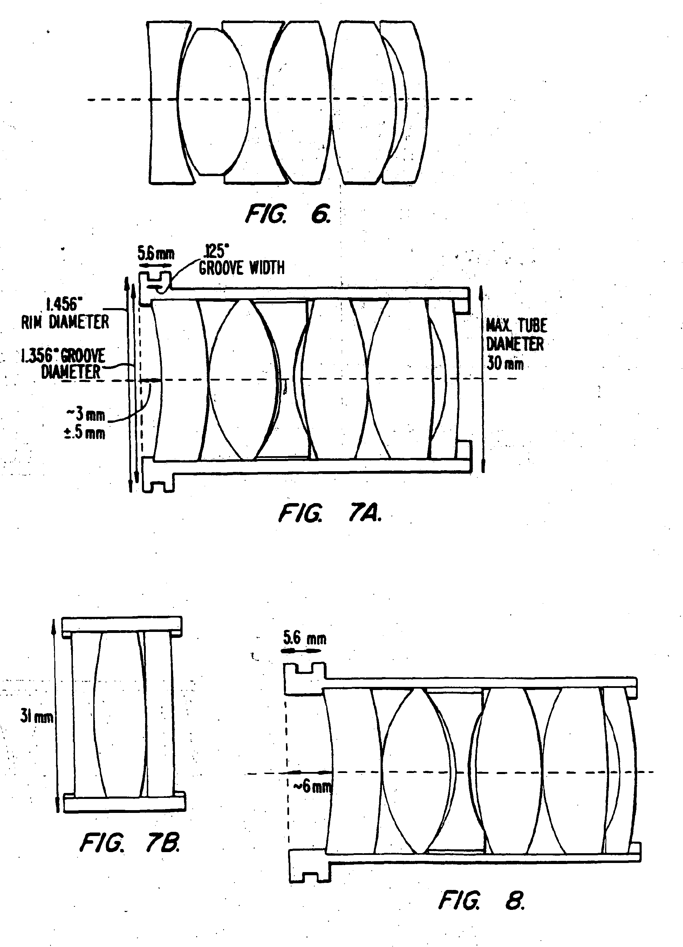

Fig. 6 is an optical schematic of the 6.25x eyepiece for the inverted microscope embodiment. The geometrical and optical parameters for this lens are set forth in Table 4. Surface 1 is the location of the scanning mirror and the front focal plane of the eyepiece. Surface 14 is the plane where the eyepiece focuses the beam, which corresponds to the front focal plane of the adapter lens (not included in Table 4 - same parameters as adapter lens for 8x eyepiece). Surfaces such as 1 and 14 are planes in air and are denoted as having a radius of 100000 mm for convenience.

Figs. 7A and 7B are optical schematics of the 8x eyepiece and adapter lens for the inverted microscope embodiment. The geometrical and microscope parameters for these lenses are set forth in Table 5. Surface 1 is the location of the scanning mirror and the front focal plane of the eyepiece. Surface 14 is the plane where the eyepiece focuses the beam, which corresponds to the front focal plane of the adapter lens. Surface 21 is located near the objective back aperture.

Fig. 8 is an optical schematic of the 8x eyepiece for the upright microscope embodiment. The geometrical and microscope parameters for this lens are set forth in Table 6. Surface 1 is the location of the scanning mirror and the front focal plane of the eyepiece. Surface 14 is the plane where the eyepiece focuses the beam. Surface 15 is located near the objective back aperture.

### Focusing Errors

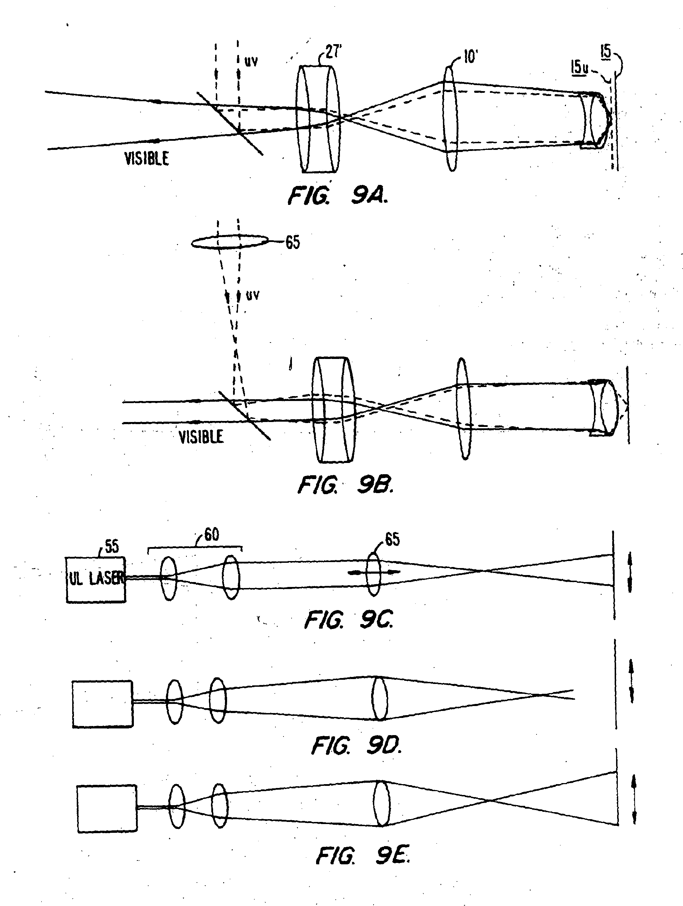

Figs. 9A-E are optical sketches showing the focusing errors caused by longitudinal chromatic aberration, as well as the way that this problem is handled.

Fig. 9A shows how longitudinal chromatic aberration in the lenses causes focusing errors. This is illustrated in the context of the inverted microscope embodiment, but the problem and the solution are the same for the upright microscope embodiment. More particularly, an incoming collimated UV excitation beam is shown in dotted lines as coming to a focus in a plane 15u, displaced upstream from the plane 15 that an incoming beam of visible light would be focused. The visible light diverging from points in plane 15 would be collimated by the lenses and would reach the detector. However, the visible light emanating from plane 15u (where the UV beam is focused) is not collimated by the lenses on its return, and diverges before reaching the detector. As mentioned above, it is convenient to correct for longitudinal chromatic aberration through the use of focusing beam expander 60 and UV correction lens 65.

Fig. 9B shows how UV correction lens 65 causes the UV excitation beam (drawn in broken lines) to focus in the same plane 15 from which emerging visible light (drawn in solid lines) is collimated by the lenses and detected. This is accomplished by bringing the UV beam to a focus before eyepiece 27', whereupon the UV beam is diverging when it encounters the lenses. The lenses are not corrected for longitudinal chromatic aberration out to the UV, and thus the UV light is focused in plane 15. It should be noted that the illustrated visible light could equally well correspond to the visible excitation beam.

Figs. 9C-E show how focusing beam expander 57 and UV correction lens 60 can be adjusted to vary the position of the UV focus and increase the beam magnification to increase the filling of the back aperture of the objective. Fig. 9C shows the situation where beam expander 57 provides an expanded collimated beam. Fig. 9D shows how by adjusting the beam expander to provide a divergent beam, it is possible to change the location of the UV focal point. Fig. 9E shows how a stronger lens can be used to bring the location of the UV focus into a usable location.

### Scanning Errors

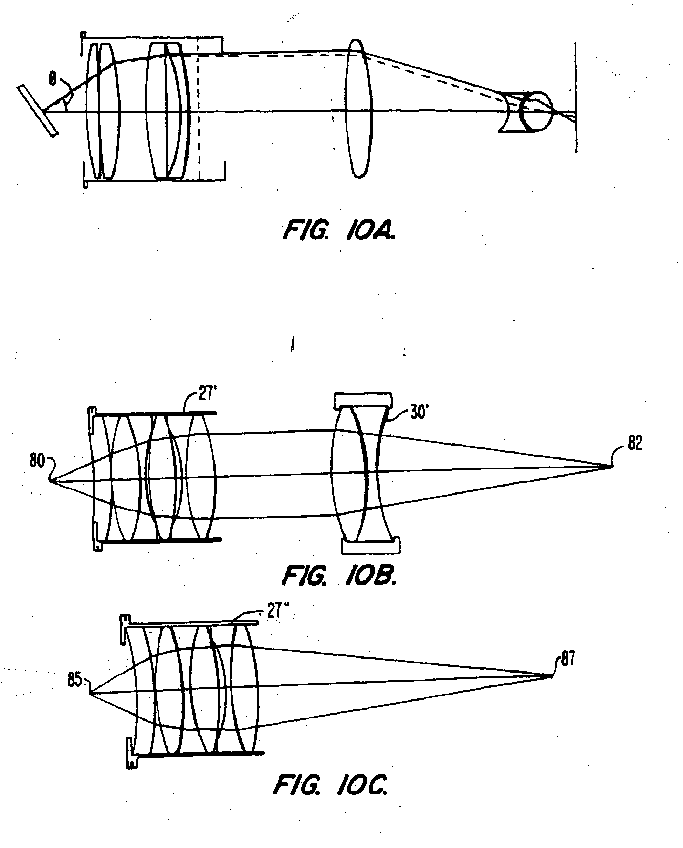

Figs. 10A-C are optical sketches showing the scanning errors caused by chromatic effects, as well as the way that this problem is handled.

Fig. 10A shows how chromatic effects in the lenses affect confocal scanning. This problem is a separate one from longitudinal (focusing) errors, which are assumed to have been taken care of as described above. This is illustrated in the context of the inverted microscope embodiment, but the problem is the same for the upright microscope embodiment as well. For confocal operation, the returning visible light (drawn as a solid line) resulting from UV excitation (drawn as a broken line) must travel along the same path when it encounters the scanning optics as the excitation light traveled when it left the scanning optics. As shown in the figure, this condition is met, but at large scan angles, due to chromatic effects in the lenses, the visible light is collected from a point that is laterally displaced from the point of maximal UV excitation. This type of scanning error results in a marked drop off in intensity across the image field of view.

Fig. 10B is an optical sketch showing the way that scanning errors are corrected for the inverted microscope. This is accomplished by requiring that UV and visible light from an object point 80 are focused by eyepiece 27' and adapter lens 30' at an achromatic image point 82, where the object point corresponds to the location of the last scanning mirror and the image point corresponds to a point near the center of the telon-objective combination. In the first-generation design, the object point is approximately 18 mm from the front surface of the eyepiece and the achromatic image point is 167.3 mm from the rear surface of the adapter lens. In the second generation 6.25x design, the corresponding distances are approximately 13.5 mm and 148.2 mm. In the second-generation 8x design, the corresponding distances are approximately 21.2 mm and 151.5 mm.

It is noted that this chromatic correction is not entirely compatible with a correction for longitudinal chromatic aberration, which as discussed above is instead handled by the UV correction lens and the focusing beam expander. The particular way that this optimization is implemented is as follows. The eyepiece is corrected so that (a) visible colors and UV parallel light in the backward direction focus to the same point, and (b) all colors of visible parallel light in the forward direction focus to the same plane for large and small scan angles. The adapter lens is optimized so that (a) parallel UV and visible light in the forward direction are achromatically focused at image point 82 and (b) visible parallel light traveling backward into the adapter lens is focused to a common front focal plane (located between the adapter lens and the eyepiece) for large and small scan angles. Further the system is substantially achromatic for all colors of visible light.

Fig. 10C is an optical sketch showing the way that scanning errors are corrected for the upright microscope. This is accomplished by requiring that UV and visible light from an object point 85 are focused by the eyepiece, designated 27", at an image point 87, where the object point corresponds to the location of the last scanning mirror and the image point corresponds to a point near the center of the objective. In the first-generation design, the object point is 32 mm from the front surface of the eyepiece and the achromatic image point is 178.25 mm from the rear surface of the eyepiece. In the second-generation 8x design, the corresponding distances are approximately 27.3 mm and 160 mm.

In any given design, the different wavelengths emanating from point 80 (or 85) will not come to a focus precisely at the same point 82 (or 87), since this constraint is one of many that must be addressed in the optimization process. Thus, relative to a reference wavelength, each given wavelength will be characterized by a chromatic scan focus error, Δf, that represents the longitudinal separation between the given wavelength's focus and that for the reference wavelength.

Table 7 shows the chromatic scan focus errors (Δf) for 330nm and 656nm relative to the position for 494nm (0 by definition) for four eyepieces. The first (eyepiece #1), used for comparison purposes is a four-element fused silica eyepiece optimized for monochromatic aberrations but not for scanning chromatic aberration. The other three are the 6.5x first-generation eyepiece and the 6.25x and 8x second-generation eyepieces, all for the inverted microscope.

Each eyepiece design was combined with a 160mm lens design in the OPTEC program, and rays of different wavelengths were traced along scan lines through the optics. The chromatic scan focus error (Δf) was determined using the 494nm reference wavelength. Δf was more than one inch at UV wavelengths with the uncorrected fused silica eyepiece, and was reduced to a few millimeters with the eyepieces corrected according to the invention. Table 8 shows Δf for additional wavelengths with the 6.25x eyepiece.

Thin lens equations predict that, for maximum resolution, an 8x eyepiece will require 25% less chromatic correction than that required by the 6x eyepiece. However, chromatic error was more than halved by designing a longer focal length 6.5x eyepiece (compare eyepieces #2 and #3 in Table 8). The 8x design required stronger surface curvatures to achieve the same chromatic correction as the 6x, increasing monochromatic aberrations to unacceptably large values. Therefore, the chromatic correction was necessarily reduced for the 8x eyepiece. Eyepiece #3 (6.5x) had the least amount of chromatic aberration but was flawed by significant distortion and was redesigned to yield eyepiece #4 (6.25x). For eyepiece #4, the chromatic correction was compromised to optimize the monochromatic corrections.

The correction for chromatic scan focus errors appears to be accomplished primarily in the eyepiece, even in the inverted microscope embodiment. Indeed, some tests indicated that an off-the-shelf 160mm visible achromat that also transmitted UV worked somewhat better than the first-generation adapter lens, and generally as well as the second-generation adapter lens.

### Field Curvature and Magnification Errors

Field curvature is typically one of the hardest aberrations to correct, and a certain residual amount is often acceptable. For example, assuming that all wavelengths are subject to the same degree of field curvature, the result would be that the sample plane would not be a plane, but rather a slightly curved surface. Fundamentally this would not be a problem since slightly curved sections would generally provide the same useful information as perfectly flat ones.

However, the real problem arises when all wavelengths are not subject to the same degree of field curvature. In such a case, for points removed from the center of the field, the UV excitation would not be confocal with the visible fluorescence. Rather, the visible light reaching the detector would be that emanating from a point away from the focused beam spot and would thus be of much lower intensity. This is the same problem that arises if longitudinal focusing errors are not corrected except that the result is not uniform across the field, but increases away from the center of the field.

Accordingly, the problem is handled by accepting some degree of field curvature and placing a priority on achieving a field that is similarly shaped for the UV and visible wavelengths.

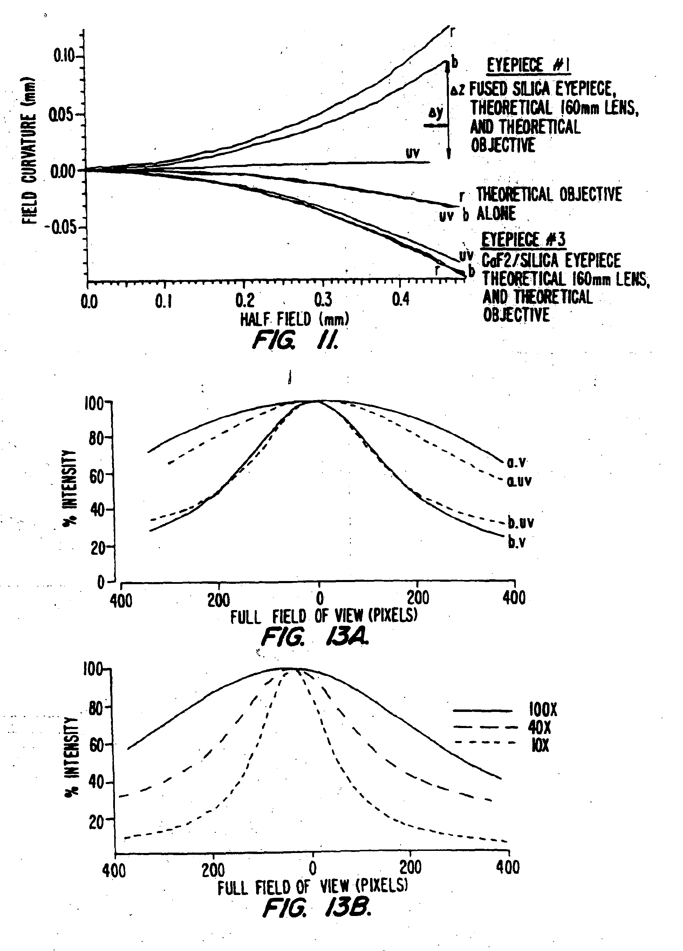

Fig. 11 shows calculated plots of field curvature for eyepiece #1 (top three lines) and eyepiece #3 (bottom three lines), each combined with a theoretical 160mm adapter lens and a theoretical objective. Also shown are plots for the objective alone (three almost coincident lines). Field curvature at the specimen plane was calculated by tracing rays of light at incremented scan angles through theoretical thick-lens models (using the OPTEC program). As the scan angle was incremented, the root-mean-square position of the objective focus was recorded in the axial and radial directions, and plotted. To model the full optical train, a theoretical infinity-corrected, 10x objective (achromatic in visible but with some residual chromatic aberration in UV) was designed from calcium fluoride and fused silica. A 160mm lens with similar chromatic properties was also designed. Rays were traced through the optical system at three wavelengths: red (656 nm), blue (488 nm), and uv (330 nm). Chromatic corrections in the calcium fluoride/fused silica eyepiece dramatically reduced lateral magnification errors, Δy, as well as field curvature errors, Δz, compared to errors introduced by the uncorrected fused silica eyepiece.

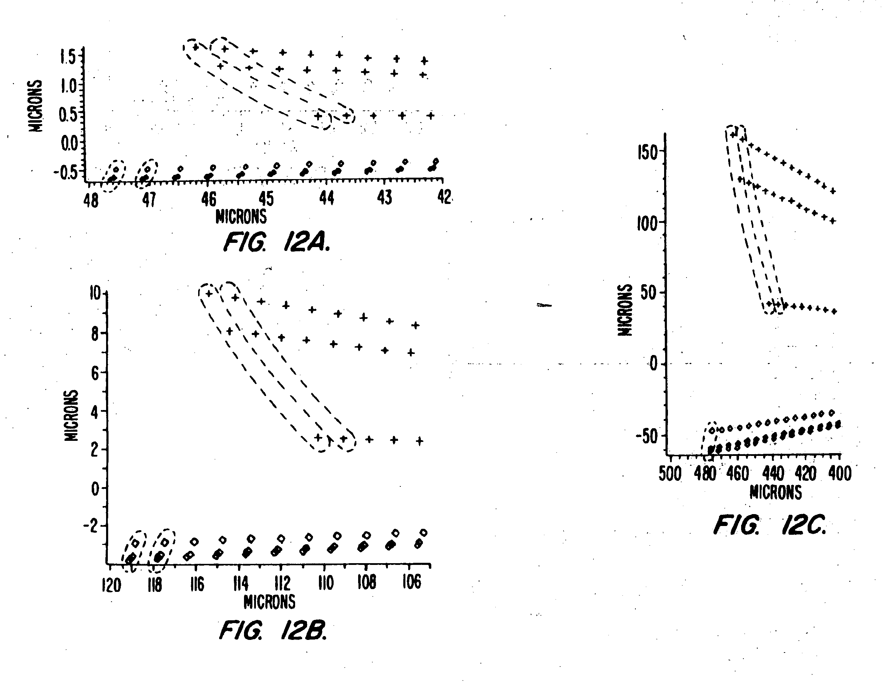

Figs. 12A-C are plots showing calculated field curvature and magnification errors near the edge of the field of view for the microscope with a 100x objective, a 40x objective, and a 10x objective. The vertical axis represents the location of the spot along the beam direction. The horizontal axis represents the transverse position of the spot. The three rows of plus signs represent measurements taken with red (top), blue, and UV (bottom) for the four-element fused silica objective. Measurements for each of the three wavelengths at a particular scan angle are grouped. The vertical separation between points represents a field curvature error between wavelengths at that angle; the horizontal separation represents a magnification error.

The four rows of diamonds represent measurements taken with the corrected six-element 6.5x eyepiece for UV (top) and red, blue, and green (grouped below). As can be seen, the field curvature and magnification errors are much smaller for the corrected eyepiece. The magnification errors dominate the field curvature errors for the lOOx objective, while the reverse is true for the 10x objective. The errors are comparable for the 40x objective.

### Overall Intensity Profile

Confocal sections were collected through the center of a thick slab of fluorescein dye, excited by blue or UV light, using a 40X Olympus objective. Curves were fit to a profile of the fluorescent image, drawn through the center of the field. The curves were shifted slightly to match their peaks. (Peak-shifting was caused by small mirror alignment differences). A full field-of-view was 768 pixels. Fig. 13A shows the fluorescent field brightness with UV or visible excitation for chromatically-corrected eyepiece #3 (curves a.v and a.uv), and chromatically-uncorrected eyepiece #1 (curves b.v and b.uv,). As can be seen, image intensity across the field was dramatically improved with the chromatically corrected eyepiece. Fig. 13B shows data collected using eyepiece #1 and lOOx, 40x, and 10x Olympus objectives. As can be seen, field intensity improved with increasing objective power.

### Focusing Lens in Detector Path

As alluded to above, collection efficiency may be improved by placing a lens in the detector path. Collimated excitation laser light passes through the eyepiece and objective, and focuses to an excitation point. Fluorophores are excited in the region around the excitation point according to the intensity distribution of a diffraction-limited, three-dimensional point spread function (psf). Light is collected by the objective along this same intensity profile, resulting in a somewhat narrower confocal psf that is approximately symmetrical around the excitation point. In a simple pinhole confocal microscope the center of the psf image is focused to the pinhole, and light from planes above and below the objective focus is rejected nearly symmetrically. In the particular microscope described above, light from the center of the psf image is focused to infinity, and consequently, light from planes above and below the objective focus is rejected asymmetrically.

The radius of the beam at the confocal aperture was calculated for light emitted from various points along the optical axis near the excitation point using thin lens equations. The proportion of the intensity collected from each point was calculated for the aperture set to the width of the collimated beam according to I=(rp/rΔ)², where rp, the radius of the pinhole, was set to the radius of the collimated beam from the excitation point, and ra was the radius of the diverging or converging light at the pinhole from out-of-focus points. Values greater than 1 were truncated to 1 (indicating all of the light was collected at the PMT). The center of the resulting pinhole collection function (pcf) was found to be shifted past the center of the psf along the optical axis. As the pinhole was opened or closed, the pcf widened or narrowed around its center. The beam of light from the center of the pcf was focused on the pinhole. For a 40x objective, the optical section, when using a 6x eyepiece, was found to be more than twice as wide as the section from a 10x eyepiece when all the light from the maximally excited point at the center of the psf is collected.

The pinhole can also be thought of as a spatial sampling device. To obtain theoretical resolution, the pcf must be at least half the width of the theoretical resolution to satisfy the Nyquist sampling criterion. The pcf generally has a different shape than the psf, with the result that a smaller pinhole must be used to attain maximum resolution in the radial direction than in the axial direction. If the pinhole size is reduced to attain theoretical axial resolution, the pcf will narrow around its center, and a large portion of the excited light from the psf will be rejected.

Thin lens equations were used to calculate the magnification of the psf in the radial direction at the pinhole. The theoretical lateral resolution was found to be attainable with a 10x eyepiece but not with a 6x eyepiece in this configuration. Similar calculations were made for 100x, 40x, 20x, and 10x objectives with 6x, 8x, and 10x eyepieces. The model 10x eyepiece could attain theoretical axial and radial resolution (although not with optimal power) for all but the 10x objective. The 8x eyepiece resolving power was marginal for the 40x objective, and was insufficient for the 10x objective. The 6x eyepiece only attained theoretical resolution with the 100x objective.

To solve this resolution problem, a 1000mm lens was placed between the dichroic mirror and the pinhole to focus collimated light from the center of the excitation spot to the pinhole. This approach shifted the center of the axial pcf to the center of the axial psf, allowing the pinhole to be reduced to any size and yet still collect light from the maximally excited point in the specimen.

At small apertures, the use of the long lens boosts the light intensity collected by about 40%. Collecting the out-of-focus light is not as much of a problem as rejecting some of the in-focus light because the aperture is smaller than the width of the returning collimated beam. The final effect is to increase the light intensity at small apertures while maintaining or boosting resolution. Due to the basic microscope design, which includes the eyepiece and long return path, the benefit of using an iris diaphragm instead of a pinhole is retained even when the long lens is inserted into the return-only path.

However, the single lens reduced the lateral magnification of the psf FWHM at the pinhole below 0.5 mm (a practical limit for the variable aperture) with some objective/eyepiece combinations. The single lens was subsequently replaced with a two lens optic designed to focus the psf image to the aperture, and magnify the lateral FWHM of the image to a size greater than 0.5 mm for all objectives. This design is expected to allow the chromatically corrected 6x eyepiece design to be used to attain theoretical confocal resolution.

### Conclusion

In conclusion it can be seen that the present invention provides an economical and effective technique for extending the advantages of confocal scanning microscopy into the UV.

While the above is a full description of the preferred embodiments, various modifications, alternative constructions, and equivalents may be used. For example, while the return-only path is shown as being provided with a single beam splitter and two detectors, a second beam splitter and a third detector could be added to exploit more fully the UV capability of the microscope. Furthermore, while the objective in the inverted microscope embodiment was shown in combination with a telon lens, an infinity-corrected objective without a telon lens could be used.

Therefore, the above description and illustrations should not be taken as limiting the scope of the present invention which is defined by the appended claims.

**TABLE 1 -**

| FIRST-GENERATION EYEPIECE FOR INVERTED MICROSCOPE | | | | | |
|---|---|---|---|---|---|
| Surface | Radius | Center Thickness | Material | Maximum Aperture | Edge Thickness |
| 1 | -66.331 | | | | |
| | | 7.00 | silica | 25.4 | 5.467 |
| 2 | -30.597 | | | | |
| | | 0.00 | air | 25.4 | 6.532 |
| 3 | 23.266 | | | | |
| | | 9.54 | CaF2 | 25.4 | 1.996 |
| 4 | -23.266 | | | | |
| | | 0.00 | air | 25.4 | 0.958 |
| 5 | -30.070 | | | | |
| | | 2.00 | silica | 25.4 | 7.509 |
| 6 | 15.388 | | | | |
| | | 1.00 | air | 17.4 | 2.077 |
| 7 | 23.266 | | | | |
| | | 9.54 | CaF2 | 25.4 | 1.996 |
| 8 | -23.266 | | | | |
| | | 1.50 | air | 25.4 | 1.186 |
| 9 | -16.052 | | | | |
| | | 1.50 | silica | 21.4 | 8.942 |
| 10 | 25.710 | | | | |
| | | 0.00 | air | 25.4 | 0.416 |
| 11 | 23.266 | | | | |
| | | 9.54 | CaF2 | 25.4 | 1.996 |
| 12 | -23.266 | | | | |
| EFL = 38.59 mm FFL = 22.4 mm Distance from scanning mirror to surface #1 = 18 mm Magnification = 250/38.59 = 6.5x Minimum aperture = 12 mm Maximum tube diameter = 30 mm | | | | | |

**TABLE 2 -**

| FIRST-GENERATION ADAPTER LENS FOR INVERTED MICROSCOPE | | | | | |
|---|---|---|---|---|---|
| Surface | Radius | Center Thickness | Material | Maximum Aperture | Edge Thickness |
| 1 | 37.211 | | | | |
| | | 6.40 | CaF2 | 25.4 | 1.931 |
| 2 | -37.211 | | | | |
| | | 0.134 | air | 25.4 | 0.00 |
| 3 | -37.259 | | | | |
| | | 2.50 | silica | 25.4 | 5.548 |
| 4 | 120.112 | | | | |
| EFL = 134.4 mm FFL = 137.3 mm BFL = 123.5 mm Distance from eyepiece to surface #1 = 155.30 mm Distance from surface #4 to telon lens = 167.30 mm | | | | | |

**TABLE 3 -**

| FIRST-GENERATION EYEPIECE FOR UPRIGHT MICROSCOPE | | | | | |
|---|---|---|---|---|---|
| Surface | Radius | Center Thickness | Material | Maximum Aperture | Edge Thickness |
| 1 | -90.609 | | | | |
| | | 7.00 | silica | 25.4 | 5.467 |
| 2 | -41.788 | | | | |
| | | 0.00 | air | 25.4 | 6.532 |
| 3 | 23.266 | | | | |
| | | 9.54 | CaF2 | 25.4 | 1.996 |
| 4 | -23.266 | | | | |
| | | 0.00 | air | 25.4 | 0.958 |
| 5 | -28.449 | | | | |
| | | 2.00 | silica | 25.4 | 7.509 |
| 6 | 19.287 | | | | |
| | | 1.00 | air | 17.4 | 2.077 |
| 7 | 23.266 | | | | |
| | | 9.54 | CaF2 | 25.4 | 1.996 |
| 8 | -23.266 | | | | |
| | | 1.50 | air | 25.4 | 1.186 |
| 9 | -16.113 | | | | |
| | | 1.50 | silica | 21.4 | 8.942 |
| 10 | 22.175 | | | | |
| | | 0.00 | air | 25.4 | 0.416 |
| 11 | 23.266 | | | | |
| | | 9.54 | CaF2 | 25.4 | 1.996 |
| 12 | -23.266 | | | | |
| EFL = 38.82 mm FFL = 22.75 mm BFL = 18.24 mm Distance from scanning mirror to surface #1 = 32 mm Distance from surface #12 to objective = 178.25 mm Magnification = 250/38.82 = 6.4 Minimum aperture = 12 mm Maximum tube diameter = 30 mm | | | | | |

**TABLE 4 -**

| SECOND-GENERATION 6.25X EYEPIECE FOR INVERTED MICROSCOPE | | | | | |
|---|---|---|---|---|---|
| Surface | Radius | Center Thickness | Material | Maximum Aperture | Edge Thickness |
| 1 | 100000.000 | | | | |
| | | 23.805 | air | 25.4 | 23.652 |
| 2 | -527.977 | | | | |
| | | 4.000 | silica | 25.4 | 6.475 |
| 3 | 35.895 | | | | |
| | | 0.000 | air | 25.4 | 0.686 |
| 4 | 23.490 | | | | |
| | | 10.500 | CaF2 | 23.0 | 3.020 |
| 5 | -17.021 | | | | |
| | | 0.000 | air | 23.0 | 0.466 |
| 6 | -18.510 | | | | |
| | | 2.000 | silica | 23.0 | 9.262 |
| 7 | 26.400 | | | | |
| | | 0.000 | air | 25.4 | 0.682 |
| 8 | 22.449 | | | | |
| | | 9.540 | CaF2 | 25.4 | 3.991 |
| 9 | -50.869 | | | | |
| | | 0.000 | air | 25.4 | 3.386 |
| 10 | 46.320 | | | | |
| | | 9.540 | CaF2 | 25.4 | 4.596 |
| 11 | -27.035 | | | | |
| | | 1.500 | air | 25.4 | 0.965 |
| 12 | -17.279 | | | | |
| | | 3.000 | silica | 21.4 | 4.584 |
| 13 | -39.099 | | | | |
| | | 25.615 | air | 25.4 | 27.735 |
| 14 | 100000.000 | | | | |
| | | | | | |

**TABLE 5 -**

| SECOND-GENERATION 8X EYEPIECE AND ADAPTER FOR INVERTED MICROSCOPE | | | | | |
|---|---|---|---|---|---|
| Surface | Radius | Center Thickness | Material | Maximum Aperture | Edge Thickness |
| 1 | 100000.000 | | | | |
| | | 21.201 | air | 25.4 | 19.943 |
| 2 | -64.724 | | | | |
| | | 7.000 | silica | 25.4 | 6.800 |
| 3 | -56.024 | | | | |
| | | 0.000 | air | 25.4 | 6.458 |
| 4 | 18.630 | | | | |
| | | 10.000 | CaF2 | 25.4 | 1.127 |
| 5 | -22.758 | | | | |
| | | 0.440 | air | 25.4 | 0.109 |
| 6 | -20.660 | | | | |
| | | 2.000 | silica | 25.4 | 8.352 |
| 7 | 20.517 | | | | |
| | | 1.000 | air | 17.6 | 1.096 |
| 8 | 39.746 | | | | |
| | | 9.540 | CaF2 | 25.4 | 4.981 |
| 9 | -33.820 | | | | |
| | | 0.000 | air | 25.4 | 5.754 |
| 10 | 26.229 | | | | |
| | | 9.540 | CaF2 | 25.4 | 5.138 |
| 11 | -72.437 | | | | |
| | | 1.700 | air | 25.4 | 0.409 |
| 12 | -22.471 | | | | |
| | | 2.000 | silica | 20.3 | 3.628 |
| 13 | -103.178 | | | | |
| | | 12.021 | air | 25.4 | 12.806 |
| 14 | 100000.000 | | | | |
| | | 148.896 | air | 25.4 | 149.199 |
| 15 | 405.219 | | | | |
| | | 3.000 | silica | 25.4 | 4.336 |
| 16 | 53.314 | | | | |
| | | 0.063 | air | 25.4 | 0.000 |
| 17 | 55.550 | | | | |
| | | 7.000 | CaF2 | 25.4 | 4.545 |
| 18 | -82.494 | | | | |
| | | 0.000 | air | 25.4 | 1.032 |
| 19 | 1672.767 | | | | |
| | | 4.000 | silica | 25.4 | 4.052 |
| 20 | -805.477 | | | | |
| | | 151.452 | air | 25.4 | 151.352 |
| 21 | 100000.000 | | | | |
| | | | | | |

**TABLE 6 -**

| SECOND-GENERATION 8X EYEPIECE FOR UPRIGHT MICROSCOPE | | | | | |
|---|---|---|---|---|---|
| Surface | Radius | Center Thickness | Material | Maximum Aperture | Edge Thickness |
| 1 | 100000.000 | | | | |
| | | 27.290 | air | 25.4 | 26.213 |
| 2 | -69.162 | | | | |
| | | 7.000 | silica | 25.4 | 6.908 |
| 3 | -64.215 | | | | |
| | | 0.000 | air | 25.4 | 6.268 |
| 4 | 18.630 | | | | |
| | | 10.000 | CaF2 | 25.4 | 1.127 |
| 5 | -22.758 | | | | |
| | | 0.600 | air | 25.4 | 0.371 |
| 6 | -19.983 | | | | |
| | | 2.000 | silica | 25.4 | 8.212 |
| 7 | 21.556 | | | | |
| | | 1.000 | air | 18.6 | 0.974 |
| 8 | 39.746 | | | | |
| | | 9.540 | CaF2 | 25.4 | 4.981 |
| 9 | -33.820 | | | | |
| | | 0.000 | air | 25.4 | 5.755 |
| 10 | 26.229 | | | | |
| | | 9.540 | CaF2 | 25.4 | 5.138 |
| 11 | -72.437 | | | | |
| | | 1.700 | air | 25.4 | 0.447 |
| 12 | -21.655 | | | | |
| | | 2.000 | silica | 19.7 | 3.341 |
| 13 | -78.532 | | | | |
| | | 12.180 | air | 25.4 | 13.215 |
| 14 | 100000.000 | | | | |
| | | 160.000 | air | 25.4 | 0 |
| 15 | 100000.000 | | | | |

**TABLE 7 -**

| SCANNING CHROMATIC ERROR (Δf) FOR FOUR EYEPIECES | | | | |
|---|---|---|---|---|
| Wavelength (nm) | Silica Eyepiece #1 Δf (mm) | 8x Eyepiece #2 Δf (mm) | 6.5x Eyepiece #3 Δf (mm) | 6.25x Eyepiece #4 Δf (mm) |
| 330 | -29.77 | -9.09 | -3.28 | -4.22 |
| 494 | 0 | 0 | 0 | 0 |
| 656 | 9.53 | 1.38 | -0.76 | -0.21 |

**TABLE 8 -**

| SCANNING CHROMATIC ERROR FOR 6.25x EYEPIECE | |
|---|---|
| Wavelength (nm) | Δf (mm) |
| 656 | -0.21 |
| 540 | 0.13 |
| 494 | 0 |
| 488 | -0.05 |
| 450 | -1.01 |
| 351 | -3.19 |
| 330 | -4.22 |

## Claims

1. A scanning confocal microscope (50) comprising:
UV source means (55) for providing a UV beam;
a visible light source (20) for providing a visible light beam;
a visible light detector (37a);
means (40a) for limiting the effective size of sai d visible light detector (37a) ;
means for directing said UV beam along a forward path from said UV source means (55) to a sample region (15), said forward path including first (60,62,65) and second (22,25,27' ,30', 32, 35) segments;
means for directing vi sible light along a return path from said sample region (15) to said visible light detector (37a), said return path including said second (22, 25, 27', 30', 32, 35) segment and a third (42,40a) segment;
focusing means (27', 27" , 30' ,32,35) in said second (22, 25, 27', 30', 32, 35) segment for focusing the UV beam to a small spot in said sample region (15);
scanning means (25) in said second (22, 25, 27', 30', 32, 35), segment for varying the angle at which said UV beam encounters said focusing means (27, 27', 30', 32, 35) so as to vary the location of said spot in said sample region (15);
said focusing means (27',27",30',32,35) being achromatically corrected; and
wherein:
means for combining (57) said UV beam and said visible light beam and directing said combined UV beam and visible light beam along the forward path to said sample region (15);
said focusing means (27',27",30',32,35) including an objective (35) being for focusing said combined UV beam and visible light beam to the small spot and being corrected for chromatic scanning errors so that where UV light leaves said scanning means (25) at a given angle and is focused at a given location in said sample region (15), visible light emanating from the given location encounters said scanning means (25) at the sam e given angle; and
said first (60,62,65) segment including a UV correction lens (65) for correcting longitudinal chromatic aberration effects for the UV beam in said focusing means (27',27",30',32,35).

2. The scanning confocal microscope of claim 1 where in:
said focusing means (27', 27",30',32,35) is not longitudinally achromatic between visible and UV light;
visible light originating from said spot is collimated on leaving said focusing means (27',27",30',32,35); and
said UV correction lens (65) for correcting longitudinal chromatic aberration effects causes said UV beam to be diverging when it encounters said focusing means (27', 2,7" , 30' , 32, 35).

3. The scanning confocal microscope of claim 1 wherein said focusing means (27', 27", 30', 32,35) comprises an eyepiece (27') , an adaptor lens (30'), a telon lens (32) and the objective (35).

4. The scanning confocal microscope of claim 1 wherein said means (40a) for limiting the effective size of said visible light detector (37a) comprises an iris diaphragm (40a)

5. The confocal microscope of claim 1 wherein a first portion (27',27") of said focusing means (27',27",3.0', 32,35) is chromatically corrected for visible and UV between a finite object point (80,85) and a finite image point (82, 87).

6. The confocal microscope of claim 5 wherein said finite object point is near said scanning means (25) and said finite image point is at or near a second portion of said focusing means (27', 27" ,30' , 32, 35).

7. The scanning confocal microscope of claim 1, further comprising a source of visible light (20) that is confocal with said UV source means (55).

## Patentansprüche

1. Konfokales Rastermikroskop (50), umfassend:
UV-Quellenmittel (55) zum Bereitstellen eines UV-Strahls;
eine Quelle (20) sichtbaren Lichts zur Bereitstellung eines sichtbaren Lichtstrahls;
einen Detektor (37a) für sichtbares Licht;
Mittel (40a) zum Begrenzen der wirksamen Größe des Detektors (37a) für sichtbares Licht;
Mittel, um den UV-Strahl einen Hinweg vom UV-Quellmittel (55) zu einem Probenbereich (15) entlang zu lenken, wobei der Hinweg ein erstes (60,62,65) und ein zweites (22,25,27',30',32,35) Segment umfasst;
Mittel, um sichtbares Licht einen Rückweg vom Probenbereich (15) zum Detektor (37a) für sichtbares Licht entlang zu lenken, wobei der Rückweg das zweite (22, 25, 27', 30', 32, 35) Segment und ein drittes (42,40a) Segment umfasst;
Fokussierungsmittel (27', 27", 30', 32, 35) im zweiten (22, 25, 27', 30', 32, 35) Segment, um den UV-Strahl zu einem kleinen Punkt im Probenbereich (15) zu fokussieren;
Abtastmittel (25) im zweiten (22, 25, 27', 30', 32, 35) Segment, um den Winkel zu variieren, in dem der UV-Strahl auf das Fokussierungsmittel (27', 27", 30', 32, 35) auftrifft, sodass die Position des Punkts im Probenbereich (15) variiert wird;
wobei das Fokussierungsmittel (27', 27", 30', 32, 35) achromatisch korrigiert ist; und worin:
ein Mittel (57) zum Kombinieren des UV-Strahls und des sichtbaren Lichtstrahls und zum Lenken des kombinierten UV-Strahls und sichtbaren Lichtstrahls einen Hinweg entlang zum Probenbereich (15) vorhanden ist;
das Fokussierungsmittel (27', 27", 30', 32, 35) ein Objektiv (35) umfasst, das zum Fokussieren des kombinierten UV-Strahls und sichtbaren Lichtstrahls zum kleinen Punkt dient und bezüglich chromatischer Abtastfehler korrigiert ist, sodass, wenn UV-Licht das Abtastmittel (25) in einem bestimmten Winkel verlässt und an einer bestimmten Position im Probenbereich (15) fokussiert wird, sichtbares Licht, das aus der bestimmten Position austritt, im gleichen Winkel auf das Abtastmittel (25) trifft; und
das erste (60,62,65) Segment eine UV-Korrekturlinse (65) zur Korrektur von longitudinalen chromatischen Aberrationseffekten des UV-Strahls im Fokussierungsmittel (27', 27", 30', 32, 35) umfasst.

2. Konfokales Rastermikroskop nach Anspruch 1, worin:
das Fokussierungsmittel (27', 27", 30', 32, 35) zwischen sichtbarem und UV-Licht nicht longitudinal achromatisch ist;
sichtbares Licht, das vom Punkt stammt, ausgerichtet wird, wenn es das Fokussierungsmittel (27', 27", 30', 32, 35) verlässt; und
die UV-Korrekturlinse (65) zur Korrektur von longitudinalen chromatischen Aberrationseffekten bewirkt, dass der UV-Strahl divergiert, wenn er auf das Fokussierungsmittel (27', 27", 30', 32, 35) trifft.

3. Konfokales Rastermikroskop nach Anspruch 1, worin das Fokussierungsmittel (27', 27", 30', 32, 35) ein Okular (27'), eine Adapterlinse (30'), eine Telonlinse (32) und ein Objektiv (35) umfasst.

4. Konfokales Rastermikroskop nach Anspruch 1, worin das Mittel (40a) zum Begrenzen der wirksamen Größe des Detektors (37a) für sichtbares Licht eine Irisblende (40a) umfasst.

5. Konfokales Rastermikroskop nach Anspruch 1, worin ein erster Abschnitt (27', 27") des Fokussierungsmittels (27', 27", 30', 32, 35) zwischen einem finiten Objektpunkt (80, 85) und einem finiten Bildpunkt (82, 87) chromatisch bezüglich sichtbarem und UV-Licht korrigiert ist.

6. Konfokales Mikroskop nach Anspruch 5, worin sich der finite Objektpunkt nahe dem Abtastmittel (25) befindet und der finite Bildpunkt an oder nahe einem zweiten Abschnitt des Fokussierungsmittels (27', 27", 30', 32, 35) befindet.

7. Konfokales Rastermikroskop nach Anspruch 1, weiters umfassend eine Quelle (20) sichtbaren Lichts, die mit dem UV-Quellenmittel (55) konfokal ist.

## Revendications

1. Microscope de balayage à foyer commun (50) comprenant:
un moyen de source UV (55) pour fournir un faisceau UV;
une source de lumière visible (20) pour fournir un faisceau de lumière visible;
un détecteur de lumière visible (37a);
un moyen (40a) pour limiter la dimension effective dudit détecteur de lumière visible (37a);
un moyen pour diriger ledit faisceau UV le long d'un trajet aller dudit moyen de source UV (55) à une région d'échantillon (15), ledit trajet aller comprenant des premier (60, 62, 65) et second (22, 25, 27', 30', 32, 35) segments;
un moyen pour diriger la lumière visible le long d'un trajet de retour à partir de ladite région d'échantillon (15) audit détecteur de lumière visible (37a), ledit trajet de retour comprenant ledit second segment (22, 25, 27', 30', 32, 35) et un troisième segment (42, 40a);
un moyen de focalisation (27', 27", 30', 32, 35) dans ledit second segment (22, 25, 27', 30', 30, 35) pour focaliser le faisceau UV à un petit point dans ladite région d'échantillon (15);
un moyen de balayage (25) dans ledit deuxième segment (22, 25, 27', 30', 32, 35) pour varier l'angle auquel ledit faisceau UV rencontre ledit moyen de focalisation (27, 27', 30', 32, 35) afin de varier l'emplacement dudit point dans ladite région d'échantillon (15);
ledit moyen de focalisation (27', 27", 30', 32, 35) étant corrigé achromatiquement; et
dans lequel:
un moyen pour combiner (57) ledit faisceau UV et ledit faisceau de lumière visible et pour diriger ledit faisceau UV et faisceau de lumière visible combinés le long du trajet aller à ladite région d'extension (15);
ledit moyen de focalisation (27', 27", 30', 32, 35) comportant un objectif (35) réalisé pour focaliser ledit faisceau UV et faisceau de lumière visible combinés au petit point et corrigé pour des erreurs de balayage chromatiques de sorte que lorsque de la lumière UV quitte ledit moyen de balayage (25) à un angle donné et est focalisée à un emplacement donné dans ladite région d'échantillon (15), de la lumière visible émanant de l'emplacement donné rencontre ledit moyen de balayage (25) au même angle donné; et
ledit premier segment (60, 62, 65) comporte une lentille de correction UV (65) pour corriger des effets d'aberration chromatique du faisceau UV dans ledit moyen de focalisation (27', 27", 30', 32, 35).

2. Microscope de balayage à foyer commun selon la revendication 1, dans lequel:
le moyen de focalisation précité (27', 27", 30', 35) n'est pas longitudinalement achromatique entre la lumière visible et la lumière UV;
la lumière visible provenant du point précité est collimatée en quittant ledit moyen de focalisation (27', 27", 30', 32, 35); et
ladite lentille de correction UV (65) pour corriger des effets d'aberration chromatique longitudinale amène ledit faisceau UV à être divergent lorsqu'il rencontre ledit moyen de focalisation (27', 27", 30', 32, 35).

3. Microscope de balayage à foyer commun selon la revendication 1, dans lequel le moyen de focalisation précité (27', 27", 30', 32, 35) comprend un occulaire (27'), une lentille d'adaptation (30'), une lentille telon (32) et l'objectif (35).

4. Microscope de balayage à foyer commun selon la revendication 1, dans lequel le moyen précité (40a) pour limiter la dimension effective dudit détecteur de lumière visible (37a) comprend un diaphragme à iris (40a).

5. Microscope de balayage à foyer commun selon la revendication 1, dans lequel une première portion (27', 27") du moyen de focalisation (27', 27", 30', 32, 35) est corrigée chromatiquement pour le visible et les UV entre un point objet fini (80, 85) et un point image fini (82, 87).

6. Microscope à foyer commun selon la revendication 5, dans lequel ledit point objet fini est proche du moyen de balayage précité (25), et ledit point image fini est à ou près d'une seconde portion dudit moyen de focalisation (27', 27", 30', 32, 35).

7. Microscope de balayage à foyer commun selon la revendication 1, comprenant en outre une source de lumière visible (20) qui est confocale avec ledit moyen de source UV (55).
